# EUROPÄISCHE PATENTSCHRIFT

(11) **EP 2 212 656 B1**
(45) Veröffentlichungstag und Bekanntmachung des Hinweises auf die Patenterteilung: **20.03.2013**
(21) Anmeldenummer: 08850404.8
(22) Anmeldetag: 13.11.2008
(51) Int. Cl.: G01F 1/66, G01F 1/68, G01F 1/688, G01F 1/684

(54) **VERFAHREN UND VORRICHTUNG ZUM BESTIMMEN DES DURCHFLUSSES EINER STRÖMENDEN FLÜSSIGKEIT**
METHOD AND DEVICE FOR DETERMINING THE THROUGHPUT OF A FLOWING FLUID
PROCÉDÉ ET DISPOSITIF DE DÉTERMINATION DU DÉBIT D'UN FLUIDE EN ÉCOULEMENT

(30) Priorität: 14.11.2007 DE 102007054186
(43) Veröffentlichungstag der Anmeldung: 04.08.2010
(73) Patentinhaber: DIGMESA AG, 2563 Ipsach (CH)
(72) Erfinder: VERJUS, Christophe, CH-2004 Neuchâtel (CH); RENEVEY, Philippe, CH-1005 Lausanne (CH); NEUMANN, Victor, CH-2036 Cormondrèche (CH)
(74) Vertreter: Lempert, Jost
(86) Internationale Anmeldenummer: PCT/EP2008/009579
(87) Internationale Veröffentlichungsnummer: WO 2009/062708

(56) Entgegenhaltungen:
- EP-A- 1 418 420
- DE-A1- 10 356 443
- US-A- 4 213 699
- US-A- 4 654 803

## Beschreibung

Die Erfindung betrifft ein Verfahren und eine Vorrichtung zum Bestimmen des Durchflusses einer strömenden Flüssigkeit nach den Oberbegriffen des Anspruchs 1 bzw. des Anspruchs 9.

Gattungsgemäße Verfahren und Vorrichtungen sind in unterschiedlicher Ausgestaltung bekannt.

So ist es bekannt die Ablenkung eines - schmalen - Laserstrahls durch eine - anderweitig - erwärmte Zone eines Fluids zu messen, um so auf die Geschwindigkeit des Fluids rückzuschließen.

Alternativ ist es bekannt, mittels einer gegebenenfalls optischen Detektoranordnung stromab einer, gegebenenfalls ebenfalls optisch erzeugten Erwärmungsstelle über die Laufzeit eines kurzzeitig erwärmten Bereichs von der Erwärmungsstelle zur Messstelle die Strömungsgewindigkeit eines Fluids zu messen.

Nachteilig ist, dass hier zwei örtlich getrennte Arbeitsorte und -einrichtungen notwendig sind, zum einen zum Erwärmen, zum anderen zur Detektion der Erwärmung.

Die US 4,654,803 sieht eine Messung der Geschwindigkeit eines Fluids durch photothermische Deflexion vor. Es wird eine einfache Ablenkung des Messstrahls gemessen. Die US 4,654,803 sieht hierzu ein Verfahren mit einem Erwärmungsstrahl, welcher einen Erwärmungsbereich einer Flüssigkeit erwärmt, vor, wobei der Erwärmungsbereich von einem optischen Messstrahl durchstrahlt wird und mittels eines Lateralzellendetektors erfasst wird. Es ist lediglich eine Messung eines Mittelwerts als der zu bestimmenden Größe vorgesehen. Die Abnahme des Mittelwertes der Geschwindigkeit wird durch ein exponentielles Modell beschrieben, jedoch ist ein solches Modell zu einfach, um ein komplexes Intensitätsprofil beschreiben zu können. Die Druckschrift misst daher lediglich die Rate der Deflexion und berechnet daraus die mittlere Geschwindigkeit des strömenden Fluids.

Die US 4,213,699 offenbart ein Verfahren zur Erfassung von kleinen Konzentrationen einer bestimmten Substanz (insbesondere Öl) in einem transparenten Medium, wobei ein Laserstrahl durch das Medium transmittiert wird. Der Laserstrahl wird von der Öl-Konzentration innerhalb des Mediums absorbiert und der Strahl beim Durchgang durch das Medium abgelenkt. Mittels eines Schirms wird die Fokussierung bzw. Ablenkung und deren Größe des abgelenkten Strahles bestimmt.

Die sich mit der Bestimmung von Konzentrationen einer Substanz in einer Flüssigkeit befassenden Druckschrift zeigt an sich eine einachsige Lasermessstrecke zur Bestimmung bestimmter Eigenschaften eines Fluids. Die Druckschrift verwendet die Aufweitung des messenden Laserstrahls durch die unterschiedliche Absorption der Substanz im Fluid zur Auswertung.

Der Erfindung liegt die Aufgabe zugrunde, ein verbessertes Verfahren und eine verbesserte Vorrichtung zum Bestimmen des Durchflusses einer strömenden Flüssigkeit unter Vermeidung der oben genannten Nachteile zu schaffen.

Erfindungsgemäß wird die genannte Aufgabe mit einem Verfahren der eingangs genannten Art gelöst, welches weiterhin die kennzeichnenden Merkmale des Anspruchs 1 aufweist. Zur Lösung der genannten Aufgabe sieht die Erfindung weiterhin eine gattungsgemäße Vorrichtung mit den kennzeichnenden Merkmalen des Anspruchs 9 vor.

Durchfluss bezeichnet eine für diesen charakteristische Größe, wie Durchflussrate, -geschwindigkeit, Volumendurchfluss oder dergleichen. Durch eine teilweise Absorption eines optischen Strahls, wie eines Laserstrahls, in der Flüssigkeit, insbesondere in Wasser, dessen Absorptionkoeffizient 0,46 m⁻¹ bei einer Wellenlänge von 970 nm ist wird in der erwärmten Region thermisch eine Linse induziert. Die Linse und insbesondere ihre flussinduzierten Eigenschaften werden zur Bestimmung der Fließgeschwindigkeit gemessen. Die Messung erfolgt mittels des nicht-absorbierten Lichts des gleichen Laserstrahls, so dass Anregungs- und Messstrahl zusammenfallen. Das Verfahren ist ein nichtinvasives, kontaktloses thermisches Messverfahren der wärmeinduzierten Modifikationen der optischen Eigenschaften des erwärmten Fluids. Die Messung erfolgt am gleichen absoluten Ort wie das Erwärmen: Erwärmungs- und Messort koinzidieren also im Raum oder sind räumlich überlagert. Die Detektion des Laserstrahls erfolgt durch ein Detektor-Array mit mehreren Einzeldetektoren (mindestens zwei), wobei gleichzeitig mehrere Einzeldetektoren Licht des auftreffenden Lichtstrahles erfassen. Dieser kann, abgesehen von der Zerstreuung durch die wärmeinduzierte thermische Linse in der Flüssigkeit zusätzlich durch eine außerhalb des Rohres vor dem Detektor-Array angeordnete optische Linse oder eine Gruppe von optischen Linsen aufgeweitet werden. Hierdurch können verschiedene Eigenschaften des Erwärmungsbereichs und nicht nur sein Versatz (Bewegung), sondern auch seine Deformation, d.h. Formänderung in der erwärmten Zone erfasst werden, die durch die Fließbewegung bedingt ist. Erfindungsgemäß wird also nicht lediglich global durch Ablenkung des Lichtstrahls der Brechungsindex der induzierten thermischen Linse bestimmt, sondern eine globale Messung über einen größeren Bereich und damit ihrer flussinduzierten Eigenschaften, insbesondere Verformungen vorgenommen. Die Flüssigkeit wird mittels eines optischen Strahls (berührungslos) erwärmt, wobei insbesondere der die Flüssigkeit erwärmende Strahl mit seinem durch diese hindurchgelassenen Licht detektiert wird.

Gemäß bevorzugten Ausgestaltungen ist vorgesehen, dass der Erwärmungs- und der Detektor-Strahl von der gleichen Strahlungs-Quelle ausgestrahlt werden oder dass der Erwärmungs-und der Detektor-Strahl von verschiedenen Strahlungs-Quellen ausgestrahlt werden. In letzterem Fall können die Strahlungs-Quellen gleiche oder unterschiedliche Frequenzbereiche aufweisen. Die Erzeugung von Erwärmungs- und Detektionsstrahl mittels Lichtquelle kann durch Aufteilung des Strahls, Filterung über unterschiedliche optische Filter und/oder unterschiedliche Aufweitung über unterschiedliche Abbildungsoptiken erfolgen.

Demgemäß kann die Einrichtung zur Erwärmung eines Bereichs der Flüssigkeit ebenfalls eine Strahlungs- oder Lichtquelle, wie ein Laser sein, der mit der Messlichtquelle übereinstimmt, wobei insbesondere die Strahlführung auch derart ist, dass Erwärmungs- und Detektionsstrahl der gleiche sind, also keine Aufspaltung der Strahlen einer Strahlungs-oder Lichtquelle erfolgt.

In bevorzugter Weiterbildung kann vorgesehen sein, dass der Detektionsstrahl einen größeren mittleren Durchmesser als der Erwärmungs-Strahl hat.

Der optische Strahl kann ins Innere des Rohres und damit der Flüssigkeitsströmung oder auch außerhalb des Rohres fokussiert sein oder aber dieser als Parallelstrahl durchtreten.

Erfindungsgemäß werden durch das Detektor-Array mehrere zeitlich aufeinander folgende Messungen durchgeführt. Zeitlich aufeinander folgende Messungen können, wenn, wie dies in bevorzugter Ausgestaltung vorgesehen ist, die Lichtquelle ein modulierter oder ein gepulster Laser ist, innerhalb eines Laserpulses durchgeführt werden. Hierdurch kann die durch die Strömungsgeschwindigkeit beeinflusste zeitliche Entwicklung der Erwärmung im Erwärmungsbereich detektiert werden.

Während grundsätzlich vorgesehen sein kann, dass die Detektion mittels eines linearen Detektor-Arrays erfolgt, wobei die Ausrichtung eines linearen Detektor-Arrays dann in Strömungsrichtung vorgesehen ist, sieht eine bevorzugte Ausgestaltung vor, dass die Detektion mittels zweidimensionalen, also flächigen Detektor-Arrays erfolgt.

Weiterbildungen des erfindungsgemäßen Verfahrens sehen vor, dass der Durchfluss aus einem empfangenen Profil des optischen Strahls bestimmt wird, wobei insbesondere statistische Momente der empfangenen Signale bestimmt werden, wie Mittelwert, Varianz, Schiefe und/oder Kurtosis. Jedes bestimmte (statistische) Moment ist mit einem unterschiedlichen Merkmal der Strahlform, damit der Form der thermischen Linse und damit der Strömungsgeschwindigkeit verbunden. Alternativ zu Strömungswerten aus dem exponentiellen Verhalten statistischer Momente über die Zeit kann eine Phasenverschiebung der statistischen Momente bei einer gegebenen Laseranregungsfrequenz bestimmt werden. So kann vorgesehen sein, dass die Verschiebung des Mittelwerts der Position des optischen Strahls als Maß für den Durchfluss bestimmt wird und/oder dass die Modifizierung der Varianz des optischen Strahls mit dem Durchfluss bestimmt wird. Andere bevorzugte Weiterbildungen der Erfindung sehen vor, dass der optische Strahl intensitätsmoduliert wird und die Phasenverschiebung der Modulation bestimmt wird, dass der optische Strahl mit mehreren Frequenzen moduliert wird und/oder dass der optische Strahl stochastisch moduliert wird.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutern sind. Dabei zeigt:
- Fig. 1: eine schematische Gesamtübersicht der erfindungsgemäßen Vorrichtung;
- Fig. 2.1 bis 2.7: verschiedene Ausgestaltungen der die strömende Flüssigkeit durchstrahlenden optischen Erwärmungs-und Detektionsstrahlen, teils als Parallelstrahl, teils fokussiert;
- Fig. 3.1, 3.2: zwei Ausgestaltungen der Erfindung mit verschiedenen Strahlungsquellen für den Erwärmungs-und den Detektionsstrahl, wobei diese in Fig. 3.1 als Parallelstrahl durchtreten und in Fig. 3.2 auf einem Bereich innerhalb Flüssigkeit fokussiert sind;
- Fig. 4: eine Darstellung der Querschnittsverhältnisse von Mess-und Heizstrahl, wenn diese nicht übereinstimmen;

- Fig. 5: die Entwicklung der Verteilungskurve des Messstrahls für verschiedene Zeiten in Strömungsrichtung;
- Fig. 6.1: die Darstellung des Mittelwerts für verschiedene Durchflussraten (in ml/min);
- Fig. 6.2: Darstellung der Standardabweichung für verschiedene Strömungsfahrten (in ml/min); und
- Fig. 7: eine Darstellung der Veränderung der Phasenbeziehung zwischen Ausgangsmodulation und empfangener optischer Strahlung.

Eine erfindungsgemäße Vorrichtung 1 weist eine optische Anordnung 2, dieser vorgeordnet eine Laserelektronik 3, eine Verstärkeranordnung 4, eine elektronische Auswerteeinrichtung 5 sowie eine Schnittstellenanordnung 6 auf. Weiterhin ist eine Spannungsversorgung 7 für die einzelnen elektrischen und elektronischen Teile vorgesehen.

Durch die optische Anordnung 2 führt ein eine Flüssigkeit 8 führendes Rohr 2.1 mit zumindest im Messbereich für den Messstrahl 2.3 transparenten Wandungen 2.1.1, beispielsweise aus Glas.

Die optische Anordnung weist einen Laser 2.2 als optische Lichtquelle auf, der beispielsweise mit einer Wellenlänge von 970 ± 15 nm und mit einer Leistung von 100 mW betrieben wird. Der optische Strahl 2.3 oder Laserstrahl wird durch eine erste Linse 2.4 parallelisiert, durchstrahlt das Rohr 2.1 und fällt auf ein Detektor-Array 2.5 mit einer Mehrzahl von Einzeldetektoren. Das Detektor-Array 2.5 ist mit einem elektronischen Verstärker 4.1 verbunden.

Die Lasersteuerung 3 weist einen Modulator 3.1 und einen Lasertreiber 3.2 zur Steuerung des Lasers 2.2 auf.

Dem Verstärker 4.1 ist in der Auswerteeinrichtung 5 ein Analogdigitalwandler 5.1 sowie ein Rechner oder Prozessor, vorzugsweise in der Form eines Digitalprozessors 5.2 nachgeordnet. Eine Schnittstelle dient zur Ausgabe der berechneten Daten auf eine Anzeige, einem Speichermedium und/oder einem Drucker zur Abstimmung der Lasersteuerung sowie der Auswertesteuerung und gegebenenfalls zur Rückkopplung bzw. Regelung des Laserbetriebs sind Steuerleitungen 9.1, 9.2 vorgesehen.

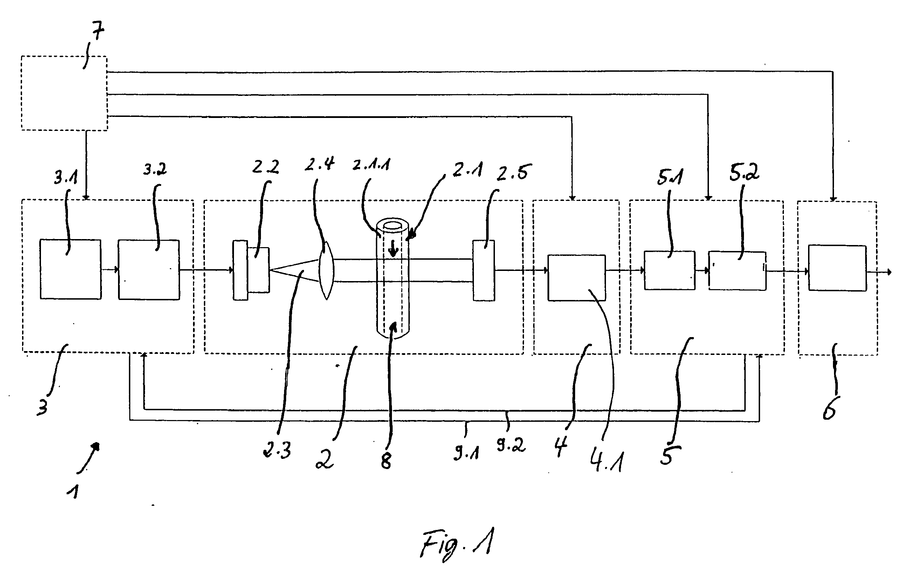

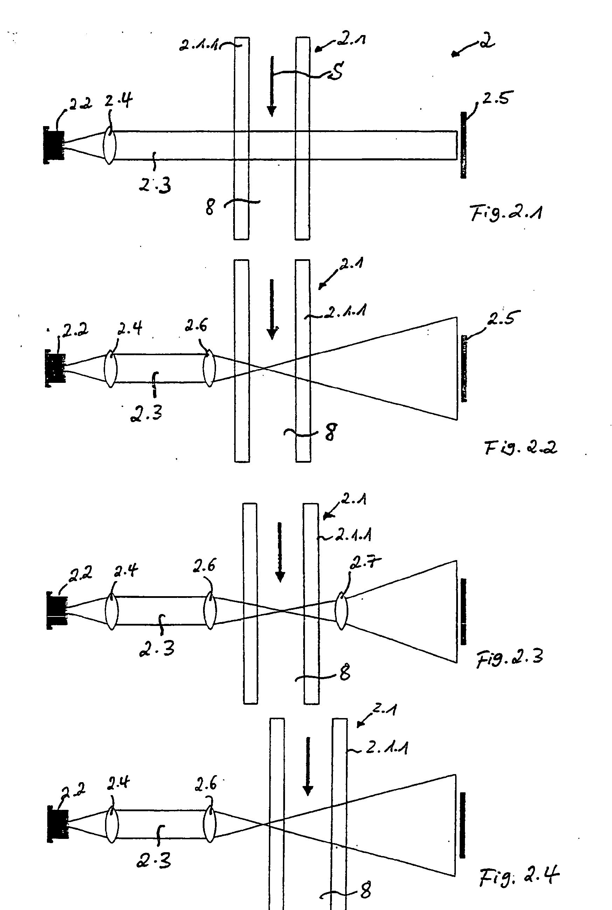

Die in der Fig. 2.1 dargestellte optische Anordnung entspricht der der Fig. 1 und weist eine Linse 2.2 zur Parallelisierung des optischen Strahls auf, der als Parallelstrahl das Rohr 2.1 und damit die durch dieses geführte Flüssigkeit 8 durchstrahlt. Die Strömungsrichtung der Flüssigkeit ist durch den Pfeil S angegeben.

Bei der Ausgestaltung der Fig. 2.2 ist vor dem Rohr 2.1 eine weitere Linse 2.6 vorgesehen, die den Strahl 2.2 im Inneren der Flüssigkeit 8 fokussiert, wobei diese aus der Flüssigkeit divergent austritt und auf das Detektor-Array 2.5 auftrifft.

Bei der Ausgestaltung der Fig. 2.3 ist zusätzlich zu den beiden Linsen 2.4 und 2.6 auf der dem Laser 2.2 abgewandten Seite des Rohres 2.1 eine weitere Linse 2.7 vorgesehen, die den Strahl 2.2 weiter aufweitet.

Die Ausgestaltung der Fig. 2.4 weicht von der Fig. 2.2 und 2.3 davon ab, dass die Fokussierung des Lichtstrahls durch die Linse 2.6 laserseitig vor dem Rohr 2.1 erfolgt.

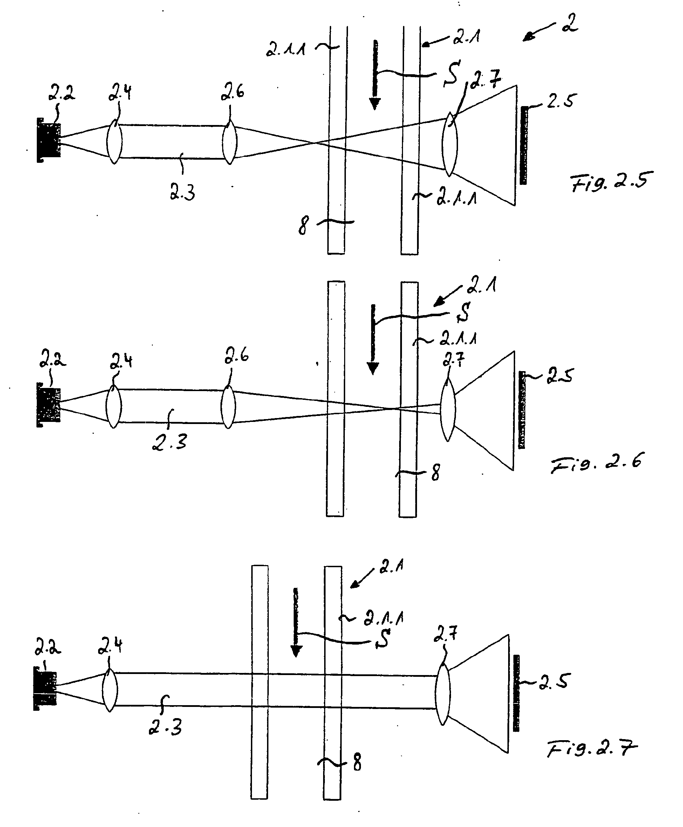

Dem entspricht die Ausgestaltung der Fig. 2.5, wobei auch hier wieder auf der dem Laser 2.2 abgewandten Seite des Rohres 2.1 eine Aufweitung durch eine Linse 2.7 erfolgt.

Während bei der Ausgestaltung der Fig. 2.2 und 2.3 der Fokus im Inneren der Flüssigkeit, aber auf der dem Laser 2.2 zugewandten Seite relativ zur Symmetrieachse liegt, liegt er bei der Ausgestaltung der Fig. 2.6 von der Symmetrieachse aus gesehen auf der dem Laser abgewandten und dem Foto-Array 2.7 zugewandten Seite innerhalb der Flüssigkeit.

Die Ausgestaltung der Fig. 2.7 weist wiederum, wie die der Fig. 2.1 ein Parallelstrahl auf, der allerdings entsprechend den Ausgestaltungen der Fig. 2.5, 2.6 durch eine Linse 2.7 auf der dem Laser abgewandten Seite vor dem Detektor-Array 2.5 aufgeweitet wird.

Bei der beschriebenen Ausgestaltung der Fig. 1 und 2.1 bis 2.7 wird von einem optischen Strahl oder Laserstrahl ausgegangen, der sowohl die im Rohr 2.1 strömende Flüssigkeit 8 erwärmt als auch die durch die Erwärmung gebildete optische Linse und deren durch die Strömung beeinflusste Gestalt detektiert, also sowohl als Heiz- als auch als Messstrahl dient.

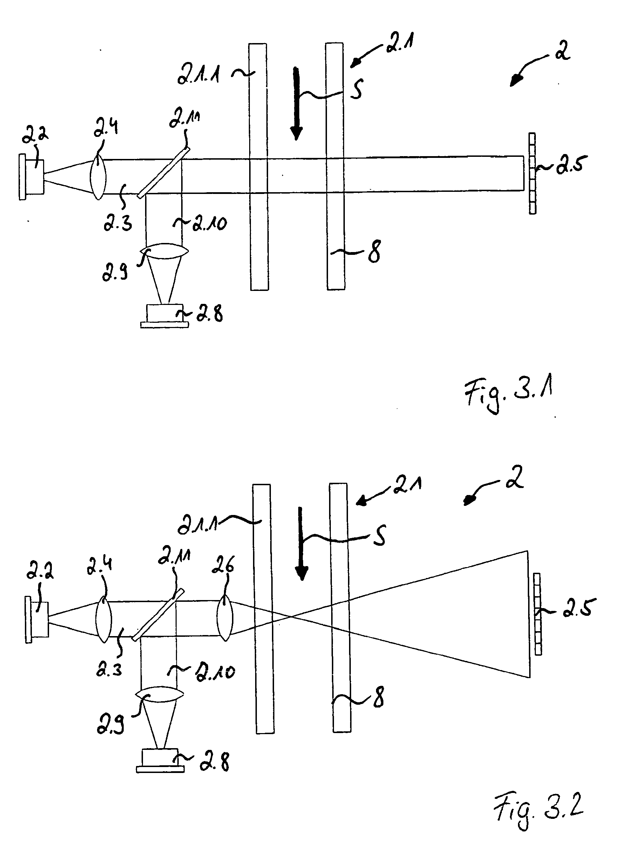

Die Fig. 3.1 und 3.2 zeigen zu den Ausgestaltungen der Fig. 2.1 bis 2.7 alternative Ausgestaltungen mit zwei verschiedenen Strahlungs- oder Lichtquellen 2.2, 2.8 für den Detektionsstrahl 2.3 bzw. den Erwärmungsstrahl 2.10. Die Anordnung und der Aufbau für den Detektionsstrahl 2.3 entspricht den Ausgestaltungen der Fig. 3.1, 3.2 jeweils der Ausgestaltungen der Fig. 2.1 und 2.2, so dass zur Beschreibung grundsätzlich auf diese verwiesen werden kann. Gleiche Teile werden mit gleichen Bezugszeichen bezeichnet. Es ist eine Strahlungsquelle 2.2 für den Detektionsstrahl 2.3 vorgesehen. In Strahlungsrichtung hinter dieser ist eine Sammellinse 2.4 angeordnet, die bei beiden Ausgestaltungen der Fig. 3.1, 3.2 den Detektionsstrahl 2.3 parallelisiert. In Abweichung und Ergänzung von den Ausgestaltungen der Fig. 2.1, 2.2 tritt dieser anschließend, bevor er durch das Rohr 2.1 und die durch dieses fließende Flüssigkeit 8 hindurchtritt durch einen unter 45° zur Strahlrichtung angestellten teildurchlässigen Spiegel 2.11 hindurch. Der Detektions-strahl tritt bei der Ausgestaltung der Fig. 3.1 als Parallelstrahl durch das Rohr 2.1 und durch dieses strömende Flüssigkeit 8 hindurch und trifft anschließend auf das Detektorarray 2.5.

Bei der Ausgestaltung der Fig. 3.2 wird der Detektions-strahl 2.3 nach Hindurchtreten durch den teildurchlässigen Spiegel 2.11 mittels der Sammellinse 2.6 in das Innere des Rohres 2.1 und damit das Innere der dieses durchströmenden Flüssigkeit 8 fokussiert und trifft als divergenter Strahl auf das Detektorarray 2.5.

Frequenz und Leistung des Detektionsstrahls sind so gewählt, dass dieser keine wesentliche Erwärmung der Flüssigkeit 8 bewirkt.

Hierzu ist eine zweite Strahlungs- oder Lichtquelle 2.8 vorgesehen, die einen Erwärmungsstrahl 2.10 aussendet. Dieser tritt zunächst durch eine Sammelliste 2.9 und wird durch diese ähnlich wie der Strahl 2.3 durch die Sammellinse 2.4 parallelisiert. Er trifft dann auf die dem Rohr 2.1 zugewandte Seite des teildurchlässigen Spiegels 2.11, wird an diesem gespiegelt und damit um 90° abgelenkt, so dass nach Spiegelung seine optische Achse mit der des Detektionsstrahls 2.3 übereinstimmt. Der Erwärmungsstrahl 2.10 tritt bei der Ausgestaltung der Fig. 3.2 ebenfalls durch die Sammellinse 2.6 und wird im Inneren der Flüssigkeit 8 fokussiert, während er bei der Ausgestaltung der Fig. 3.1 in diese als Parallelstrahl eintritt.

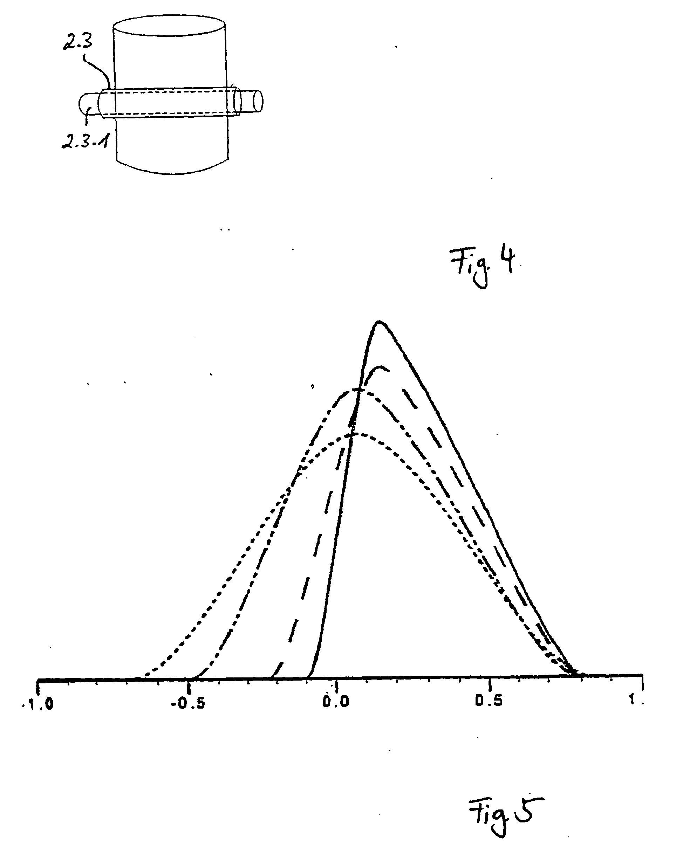

Während zur Vereinfachung in den Fig. 3.1 und 3.2 die Strahlen 2.3 und 2.10 nach Spiegelung mit übereinstimmender Querschnittsabmessung und Strahlenführung dargestellt sind, können diese abweichen, wie in Fig. 4 dargestellt und im Folgenden beschrieben.

Darüber hinaus ist es auch möglich ggf. den Detektions-strahl als Parallelstrahl durch die Flüssigkeit hindurchtreten zu lassen, den Erwärmungsstrahl 2.10 aber ins Innere derselben zu fokussieren oder umgekehrt, d.h. den Erwärmungsstrahl als Parallelstrahl durch die Flüssigkeit hindurchtreten zu lassen und den Detektionsstrahl ins Innere oder in einer weiteren in den Fig. 2.3 bis 2.6 dargestellten Weise zu fokussieren. Hierbei ist dann ggf. der teildurchlässige Spiegel 2.11 hinter der Sammellinse 2.6 angeordnet und diese je nach gewünschter Strahlfokussierung entweder im Strahlengang des Detektionsstrahl 2.3 oder des Strahlengangs des Erwärmungsstrahls 2.10. Darüber hinaus sind weiterhin die Ausgestaltungen der Fig. 2.3, 2.5 bis 2.7, d.h. eine Zerstreuungslinse 2.7 für den Detektions-strahl nach Durchtritt desselben durch das Rohr 2.1 und die Flüssigkeit 8 bei der Ausgestaltung 2 verschiedenen Strahlungsquellen für Detektionsstrahl 2.3 und Erwärmungsstrahl 2.8 möglich.

Die Ausgestaltung der Fig. 4 sieht zwei Strahlen und zwar neben dem Messstrahl 2.3 einen separaten Heizstrahl 2.3.1 vor. Wesentlich ist, dass letzterer einen Durchmesser aufweist, der nicht größer als der des Messstrahles 2.3, also gleich oder kleiner ist. Im dargestellten Ausführungsbeispiel sind Messstrahl 2.3 und Heizstrahl 2.3.1 koaxial geführt. Sie können von unterschiedlichen Lichtquellen oder aber von einer Lichtquelle stammen und in der entsprechenden Weise auf den dargestellten optischen Pfad eingefädelt sein.

Bei dem Laser 2.2 handelt es sich um einen modulierten oder gepulsten Laser, so dass der Laserstrahl ein modulierter oder gepulster Laserstrahl 2.3 ist.

Durch das Vorsehen eines Detektor-Arrays 2.5 mit mehreren Einzeldetektoren, wobei das Detektor-Array 2.5 ein lineares oder ein flächiges Detektor-Array sein kann, wird nicht lediglich die lokale Ablenkung des Laserstrahls durch die Linse festgestellt, sondern hierdurch können durch die mehreren Einzeldetektoren die globalen Eigenschaften der durch die Erwärmung gebildeten thermischen Linse bestimmt werden. Es werden mehrere Messungen über die Zeit - innerhalb eines Laserpulses - vorgenommen, so dass das Zeitverhalten der Entwicklung der thermischen Linse erfasst werden kann, welches wesentlich durch die Strömungsgeschwindigkeit der Flüssigkeit bestimmt wird. Zur genaueren Bestimmung des Strömungsverhaltens werden mittels der Auswerteeinrichtung 4 statistische Auswertungen der empfangenen Signale vorgenommen, insbesondere die Bestimmung des ersten Moments als Mittelwert, des zweiten Moments als Varianz, des dritten Moments als statistische Schiefe sowie des vierten Moments als Kurtosis oder Wölbung.

Durch die Einstrahlung von Lichtenergie, insbesondere Laserenergie in die Flüssigkeit 8 erfolgt eine lokale Erhöhung der Temperatur, die in direkter Beziehung zur Laserintensität steht und zu einer nicht gleichmäßigen Verteilung der Temperatur in der Flüssigkeit führt. Hierdurch wird der Effekt einer thermischen Linse induziert, welche den Lichtstrahl beeinflusst und damit das von der Detektoranordnung aufgenommene Intensitäts- oder Leistungsprofil modifiziert. Durch die Strömung der Flüssigkeit ändert sich die Temperaturverteilung und demgemäß auch das Profil der empfangenen Lichtleistung. Diese Änderung in Verbindung mit der Lasersteuerung wird genutzt, um Strömungseigenschaften der strömenden Flüssigkeit zu bestimmen.

Bei nicht strömender Flüssigkeit ist das Intensitäts- oder Leistungsprofil der empfangenen Strahlung symmetrisch und der Effekt der thermischen Linse besteht in einer Reduzierung der Breite des Intensitätsprofils (wobei allerdings auch in Abhängigkeit von der physikalischen Konfiguration des Systems und der Laserfokussierung eine Verbreiterung des Laserstrahls erfolgen kann). Wenn die Flüssigkeit strömt, ist das Temperaturprofil nicht mehr symmetrisch. Hieraus ergibt sich, dass, wie dies in Fig. 5 gezeigt ist, die Intensitätsverteilung des Lasers von der Position bei ruhender Flüssigkeit abweicht und nicht-symmetrisch wird. Diese Abweichungen werden erfindungsgemäß zur Bestimmung von Charakteristika oder Eigenschaften der Flüssigkeitsströmung, wie Durchflussrate oder Volumenstrom herangezogen, wobei Fließgeschwindigkeit und Durchflussrate über den Durchmesser des Rohrs direkt miteinander in Verbindung stehen.

Bei Pulsmodulation des Lasers werden während eines Pulses Messungen vorgenommen und die empfangenen Signale verarbeitet. Dauer und Frequenz der Pulse werden vorzugsweise an Zeitkonstanten des Systems angepasst. Diese Konstanten hängen von der physikalischen Konfiguration des Systems, wie Abstand zwischen den Teilen, von der Fokussierung des Laserstrahls und dem Bereich der zu bestimmenden Flussrate ab. Da die Temperatur sich erhöht, wenn der Laser eingeschaltet ist, ändert sich das empfangene Leistungs- oder Intensitätsprofil des Laserstrahls mit der Zeit. Diese Änderung ist von der Geschwindigkeit des Fluids im System und damit der Durchflussrate abhängig. Es wurde festgestellt, dass die Änderung der mittleren Position oder des Positions-Mittelwerts der Laserintensitätverteilung und deren Breite (Standardabweichung) in Beziehung zur Strömungsgeschwindigkeit stehen. Demgemäß können aufgrund der durch die einzelnen in Strömungsrichtung aufeinander folgenden Detektorelemente des Detektor-Arrays empfangenen Lichtintensität in üblicher Weise (örtlicher) Mittelwert und Standardabweichung der empfangenen Lichtintensität bestimmt werden.

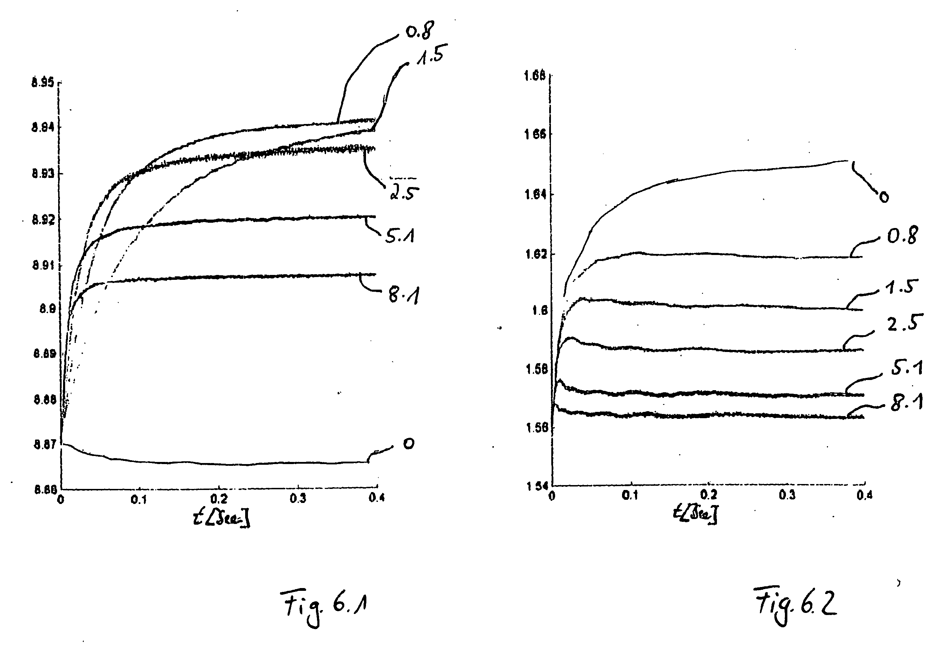

Wie den Fig. 6.1 und 6.2 zu entnehmen ist, zeigen diese einen exponentiellen Zerfall und ähnliches Zeitverhalten. Momente höherer Ordner, wie Schiefe und Kurtosis können ebenfalls bestimmt werden und stehen ebenfalls in Beziehung zur Durchflussrate. Derartige Werte bilden ein Beispiel für eine Projektion erhaltener Daten auf einen Daten-Unterraum, wodurch unterschiedliche Beiträge in Signalen separiert werden können und die Bestimmung der Durchflussrate so derart verbessert werden kann.

Wie die Zeichnungen zeigen, kann der Mittelwert beispielsweise durch ein Modell in der Form µ(t) ≅ α₀ + α.e ^{-t/τ} oder auch µ(t) = γ + ∑βᵢtanh (αᵢt) angenähert werden, wobei das letztere Modell eine bessere Konvergenz aufweisen und die Empfindlichkeit hinsichtlich der Anfangsbedingungen gegenüber dem exponentiellen Modell reduziert ist.

Die Parameter in den Modellformeln sind an die Durchflussraten anzupassen, wobei neben linearen auch nicht lineare Modelle herangezogen werden können.

Der für eine gepulste Anregung des Lasers entwickelte Algorithmus legt eine exponentielle Antwort des Systems nahe. In der Filtertheorie entspricht eine solche Antwort einem auto-regressiven Modell erster Ordnung. Es wurde festgestellt, dass die Zeitkonstante des exponentiellen Modells, welche die Entwicklung der Mittelwert-Position darstellt, in enger Beziehung zur Durchflussrate steht. Unter der Annahme, dass sich das System wie ein auto-regressiver Filter erster Ordnung verhält, wird die Phase der Antwort mit der Durchflussrate variieren. Wird daher die Ausgangslaserleistung mit einer Kosinusfunktion geändert und die Phasenverschiebung zwischen der empfangenen mittleren Laserleistungs-Position (oder Momente höherer Ordnung) und dem modulierten Ausgangssignal bestimmt, so kann auch hierdurch die Durchflussrate gewonnen werden. Wird der Durchfluss durch eine Pumpe gepumpten Flüssigkeit bestimmt und liegt die Pumpfrequenz nahe der Modulationsfrequenz, so können Probleme auftreten. Diese können dadurch überwunden werden, dass der Laser mit zwei unterschiedlichen Frequenzen moduliert wird und die Durchflussrate aus beiden bestimmt wird, wobei das empfangene Signal um jede Frequenz herum gefiltert wird. Eine andere Lösung kann darin bestehen, die störenden Wechselwirkungen zu detektieren und die Modulationsfrequenz zu ändern. Weiterhin können durch eine Hauptkomponentenanalyse (Principle Component Analysis - PCA) die verschiedenen Moden der Schwingungen im Sensor getrennt werden.

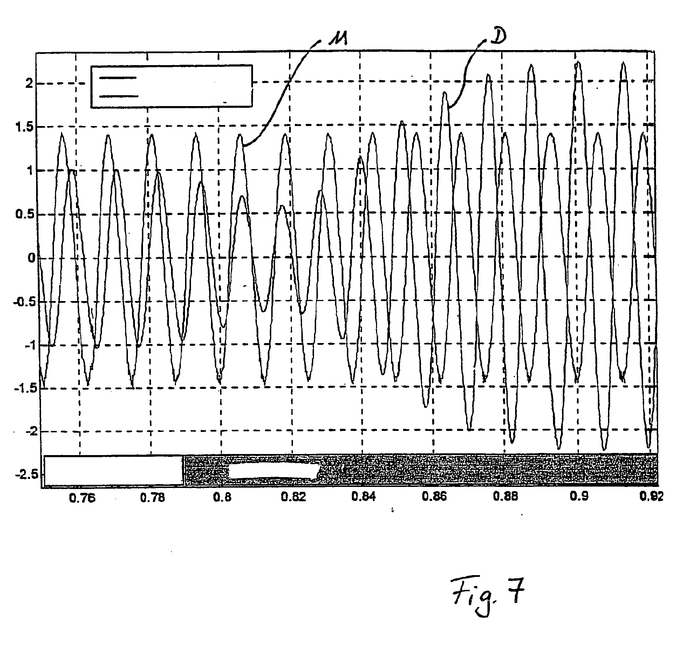

Die Änderung der Phasenverschiebung mit der Geschwindigkeit ist in der Fig. 7 dargestellt.

Es ist vorteilhaft, mehrere Modulationsfrequenzen zur Modulation des Lasers einzusetzen, wodurch der zu überwachende Bereich der Durchflussraten vergrößert werden kann. Beispielsweise ist die Auflösung bei geringen Durchflussraten von typischerweise 0 bis 6 Milliliter pro Minute (bei einem Rohrinnendurchmesser von 4mm) bei einer niedrigen Modulationsfrequenz von beispielsweise 10 Hz besser, während mit einer höheren Modulationsfrequenz von beispielsweise 80 Hz der Messbereich auf bis zu 25 Milliliter pro Minute erweitert werden kann.

Während bei einem gepulsten Laser die zeitliche Information der empfangenen Signale zur Bestimmung der Durchflussrate herangezogen wird, werden bei Modulation der Ausgangsintensität des Lasers sowohl die zeitliche als auch die Frequenzantwort bei ausgewählten Frequenzen herangezogen. Um den gesamten Zeit-Frequenz-Bereich zu nutzen, kann stochastisch das Rauschen zur Steuerung des Lasers herangezogen werden (beispielsweise weißes Rauschen, gegebenenfalls gefiltert). Hierdurch kann ein weiterer Frequenzbereich abgedeckt werden. Durch Bestimmung der Antwort des Systems und damit der Übertragungsfunktion kann eine Beziehung zwischen dieser und der Durchflussrate hergestellt werden.

### Bezugszeichenliste

- 1: Vorrichtung
- 2: optische Anordnung
- 2.1: Rohr
- 2.1.1: Wandungen
- 2.2: Laser
- 2.3: optischer Strahl
- 2.3.1: Heizstrahl
- 2.4: Linse
- 2.5: Detektor-Array
- 2.6: Linse
- 2.7: Linse
- 2.8: Strahlungs- oder Lichtquelle
- 2.9: Sammelliste
- 2.10: Erwärmungsstrahl
- 2.11: Spiegel
- 3: Laserelektronik
- 3.1: Modulator
- 3.2: Lasertreiber
- 4: Verstärkeranordnung
- 4.1: Verstärker
- 5: Auswerteeinrichtung
- 5.1: Analogdigitalwandler
- 5.2: Digitalprozessor
- 6: Schnittstellenanordnung
- 7: Spannungsversorgung
- 8: Flüssigkeit
- 9.1, 9.2: Steuerleitungen

## Patentansprüche

1. Verfahren zum Bestimmen des Durchflusses einer strömenden Flüssigkeit, wobei
- die Flüssigkeit (8) mittels eines optischen Erwärmungsstrahls (2.10, 2.3) erwärmt wird,
- der Erwärmungsstrahl (2.10, 2.3) intensitätsmoduliert oder gepulst wird, und
- der Erwärmungsort von einem optischen Detektions-Strahl (2.3) durchstrahlt wird,
**dadurch gekennzeichnet,**
- **dass** die optischen Achsen von Erwärmungs- und Detektions-Strahl (2.10, 2.3) zumindest am Erwärmungsort übereinstimmen
- **dass** der Detektions-Strahl (2.3) mittels eines Detektor-Arrays (2.5) aufgenommen wird,
- **dass** durch das Detektor-Array (2.5) mehrere zeitlich aufeinander folgende Messungen während der Erwärmung durchgeführt werden, wodurch der zeitliche Verlauf des refraktiven Indexes des Erwärmungsbereichs in der Flüssigkeit (8) bestimmt wird.

2. Verfahren nach Anspruch 1, **dadurch gekennzeichnet, dass** der Erwärmungs- und der Detektions-Strahl (2.3) von der gleichen Strahlungs-Quelle (2.2) ausgestrahlt werden.

3. Verfahren nach Anspruch 1, **dadurch gekennzeichnet, dass** der Erwärmungs- und der Detektions-Strahl (2.10, 2.3) von verschiedenen Strahlungs-Quellen (2.8, 2.2) ausgestrahlt werden.

4. Verfahren nach einem der Ansprüche 1 bis 3, **dadurch gekennzeichnet, dass** der Detektions-Strahl (2.3) einen größeren mittleren Durchmesser als der Erwärmungs-Strahl (2.10, 3.3.1) hat.

5. Verfahren nach einem der vorangehenden Ansprüche, **dadurch gekennzeichnet, dass** der oder die optischen Strahlen (2.10, 2.3) auf einen Bereich im Inneren der Flüssigkeit (8) fokussiert werden.

6. Verfahren nach einem der Ansprüche 1 bis 4, **dadurch gekennzeichnet, dass** der oder die die Flüssigkeit (8) durchtretenden Strahlen (2.10, 2.3) Parallelstrahlen sind.

7. Verfahren nach einem der vorangehenden Ansprüche, **dadurch gekennzeichnet, dass** die Detektion mittels eines linearen Detektor-Arrays (2.5) oder mittels eines flächigen zweidimensionalen Detektor-Arrays (2.5) erfolgt.

8. Verfahren nach einem der vorangehenden Ansprüche, **dadurch gekennzeichnet, dass** der Durchfluss aus einem empfangenen Profil des optischen Strahls bestimmt wird, indem insbesondere die Fließgeschwindigkeit der Flüssigkeit (8) durch Bestimmung statistischer Momente der empfangenen Signale bestimmt werden, wie Mittelwert, Varianz, Schiefe und/oder Kurtosis.

9. Vorrichtung zum Bestimmen des Durchflusses einer Flüssigkeit mit einem von einer Flüssigkeit (8) durchströmten Rohr (2.1) mit einer für eine Messstrahlung zumindest teilweise transparenten Wandung (2.1.1), einer Einrichtung zum Erwärmen zumindest eines Bereichs im Inneren der Flüssigkeit (8), einem Laser (2.2) zur Erzeugung einer Messstrahlung und einer elektronischen Auswerteeinrichtung (5), wobei die Einrichtung zur Erwärmung eines abgegrenzten inneren Bereichs der Flüssigkeit (8) und eine den Strahl des Lasers(2.2) führende optische Anordnung (2.4, 2.6) derart angeordnet sind, dass ein Messstrahl (2.3) den erwärmten Bereich am absoluten Ort seiner Erwärmung durchstrahlt, und wobei die Einrichtung zum Erwärmen der Flüssigkeit ein Laser (2.8, 2.2) zur Erzeugung eines intensitätsmodulierten oder gepulsten Erwärmungsstrahls (2.10, 2.3) ist, **dadurch gekennzeichnet,**
- **dass** die optische Anordnung (2.4, 2.6) derart ausgebildet ist, dass die optischen Achsen von Erwärmungs- und Messstrahl (2.10, 2.3) am Erwärmungsort übereinstimmen, und
- **dass** ein Detektor-Array (2.5) zum Empfangen der Messstrahlung vorgesehen ist, wobei das Detektor-Array (2.5) zur Durchführung mehrerer aufeinander folgender Messungen während der Erwärmung ausgebildet ist, wodurch der zeitliche Verlauf des refraktiven Indexes des Erwärmungsbereiches in der Flüssigkeit bestimmbar ist.

10. Vorrichtung Anspruch 9, **dadurch gekennzeichnet, dass** der den Messstrahl (2.3) erzeugende Laser (2.2) die Einrichtung zur Erwärmung der Flüssigkeit ist.

11. Vorrichtung nach Anspruch 10, **dadurch gekennzeichnet, dass** die optische Anordnung (2.4, 2.6) derart ist, dass der optische Strahl (2.3) nicht-aufgespalten durch die Flüssigkeit (8) gerichtet wird.

12. Vorrichtung nach einem der Ansprüche 9 bis 11, **gekennzeichnet durch** eine Fokussierlinse (2.6) zum Fokussieren des Laserstrahls ins Innere der Flüssigkeitsströmung (8).

13. Vorrichtung nach einem der Ansprüche 9 bis 12, **dadurch gekennzeichnet, dass** das Detektor-Array (2.5) ein line-ares Detektor-Array oder ein flächiges zweidimensionales Detektor-Array (2.5) ist.

14. Vorrichtung nach einem der Ansprüche 9 bis 13, **dadurch gekennzeichnet, dass** die Auswerteeinrichtung zur Bestimmung statistischer Momente der empfangenen Signale, wie Mittelwert, Varianz, statistische Schiefe und/oder Kurtosis ausgebildet ist.

## Claims

1. Method for determining the throughput of a flowing fluid,
- the fluid (8) being heated by means of an optical heating beam (2.10, 2.3),
- the heating beam (2.10, 2.3) being intensity-modulated or pulsed, and
- the heating location being transradiates by an optical detection beam (2.3),
**characterized**
- **in that** the optical axes of the heating and detection beams (2.10, 2.3) correspond at least at the heating location,
- **in that** the detection beam (2.3) is recorded by means of a detector array (2.5), and
- **in that** the detector array (2.5) is used to carry out a plurality of temporally successive measurements during the heating, as a result of which the time profile of the refractive index of the heating region in the fluid (8) is determined.

2. Method according to Claim 1, **characterized in that** the heating beam and the detection beam (2.3) are emitted by the same radiation source (2.2).

3. Method according to Claim 1, **characterized in that** the heating and detection beams (2.10, 2.3) are emitted by different radiation sources (2.8, 2.2).

4. Method according to one of Claims 1 to 3, **characterized in that** the detection beam (2.3) has a larger mean diameter than the heating beam (2.10, 2.3.1).

5. Method according to one of the preceding claims, **characterized in that** the singular or plural optical beam(s) (2.10, 2.3) is/are focused on a region in the interior of the fluid (8).

6. Method according to one of Claims 1 to 4, **characterized in that** the singular or plural beams (2.10, 2.3) passing through the fluid (8) are parallel beams.

7. Method according to one of the preceding claims, **characterized in that** the detection is performed by means of a linear detector array (2.5), or by means of a planar two-dimensional detector array (2.5).

8. Method according to one of the preceding claims, **characterized in that** the throughput is determined from a received profile of the optical beam, in particular by determining the flow rate of the fluid (8) by determining statistical moments of the received signals, such as mean value, variance, skewness and/or kurtosis.

9. Device for determining the throughput of a fluid, having a pipe (2.1), through which a fluid (8) flows and which comprises a wall (2.1.1) which is at least partially transparent to a measurement radiation, an apparatus for heating at least one region in the interior of the fluid (8), a laser (2.2) for generating a measurement radiation, and an electronic evaluation device (5), the apparatus for heating a delimited inner region of the fluid (8), and an optical arrangement (2.4, 2.6) guiding the beam of the laser (2.2) being arranged in such a way that a measurement beam (2.3) transradiates the heated region at the absolute location of its heating, and the apparatus for heating the fluid being a laser (2.8, 2.2) for generating an intensity-modulated or pulsed heating beam (2.10, 2.3), **characterized**
- **in that** the optical arrangement (2.4, 2.6) is designed in such a way that the optical axes of heating and measurement beams (2.10, 2.3) correspond at the heating location, and
- **in that** a detector array (2.5) is provided for receiving the measurement radiation, the detector array (2.5) being designed to carry out a plurality of successive measurements during the heating, as a result of which it is possible to determine the time profile of the refractive index of the heating region in the fluid.

10. Device according to Claim 9, **characterized in that** the laser (2.2) generating the measurement beam (2.3) is the apparatus for heating the fluid.

11. Device according to Claim 10, **characterized in that** the optical arrangement (2.4, 2.6) is such that the optical beam (2.3) is directed through the fluid (8) without being split by the fluid (8).

12. Device according to one of Claims 9 to 11, **characterized by** a focusing lens (2.6) for focusing the laser beam into the interior of the fluid flow (8).

13. Device according to one of Claims 9 to 12, **characterized in that** the detector array (2.5) is a linear detector array or a planar two-dimensional detector array (2.5).

14. Device according to one of Claims 9 to 13, **characterized in that** the evaluation device is designed for determining statistical moments of the received signals, such as mean value, variance, statistical skewness and/or kurtosis.

## Revendications

1. Procédé de détermination du débit d'un fluide en écoulement :
- le fluide (8) étant chauffé à l'aide d'un faisceau chauffant optique (2.10, 2.3) ;
- le faisceau chauffant (2.10, 2.3) étant pulsé ou modulé en intensité ;
- le point de chauffe étant irradié par un faisceau de détection optique (2.3) ;
**caractérisé en ce que** :
- les axes optiques du faisceau chauffant et du faisceau de détection (2.10, 2.3) se rencontrant au moins au niveau du point de chauffe ;
- le faisceau de détection (2.3) étant absorbé à l'aide d'une batterie de détecteurs (2.5) ;
- la batterie de détecteurs (2.5) permet de réaliser plusieurs mesures successives pendant le réchauffement, permettant ainsi de déterminer la courbe dans le temps de l'indice de réfraction de la zone chauffée dans le fluide (8).

2. Procédé selon la revendication 1, **caractérisé en ce que** le faisceau chauffant et le faisceau de détection (2.3) sont émis par la même source de rayonnement.

3. Procédé selon la revendication 1, **caractérisé en ce que** le faisceau chauffant et le faisceau de détection (2.10, 2.3) sont émis par des sources de rayonnement différentes.

4. Procédé selon l'une quelconque des revendications 1 à 3, **caractérisé en ce que** le faisceau de détection (2.3) présente un diamètre moyen supérieur à celui du faisceau chauffant (2.10, 2.3.1).

5. Procédé selon l'une quelconque des revendications précédentes, **caractérisé en ce que** le ou les faisceaux optiques (2.10, 2.3) sont concentrés sur une zone située à l'intérieur du fluide (8).

6. Procédé selon l'une quelconque des revendications 1 à 4, **caractérisé en ce que** le ou les faisceaux (2.10, 2.3) pénétrant le fluide (8) sont des faisceaux parallèles.

7. Procédé selon l'une quelconque des revendications précédentes, **caractérisé en ce que** la détection est réalisée à l'aide d'une batterie de détecteurs (2.5) linéaires ou à l'aide d'une batterie de détecteurs (2.5) bidimensionnels plans.

8. Procédé selon l'une quelconque des revendications précédentes, **caractérisé en ce que** le débit est déterminé à partir d'un profil de faisceau optique reçu en déterminant notamment la vitesse d'écoulement du fluide (8) par détermination de moments statistiques des signaux reçus, tels que la valeur moyenne, la variance, l'oblique et/ou le kurtosis.

9. Dispositif de détermination du débit d'un fluide à l'aide d'un tuyau (2.1) traversé par un fluide (8) et pourvu d'une paroi (2.1.1) au moins en partie transparente à un faisceau de mesure, ainsi que d'un dispositif permettant de chauffer au moins une zone située à l'intérieur du fluide (8), d'un laser (2.2) permettant d'émettre un faisceau de mesure et d'un dispositif d'analyse électronique (5), le dispositif de réchauffement d'une zone intérieure délimitée du fluide (8) et un agencement optique (2.4, 2.6) guidant le faisceau du laser (2.2) étant disposés de telle sorte qu'un faisceau de mesure (2.3) irradie la zone chauffée au niveau du lieu absolu de son réchauffement ; et
le dispositif de réchauffement du fluide étant un laser (2.8, 2.2) permettant d'émettre un faisceau chauffant (2.10, 2.3) pulsé ou modulé en intensité ;
**caractérisé en ce que** :
- agencement optique (2.4, 2.6) conçu de telle sorte que les axes optiques du faisceau de mesure et du faisceau chauffant se rencontrent au niveau du point de chauffe ; et
- une batterie de détecteurs (2.5) est prévue pour recevoir le faisceau de mesure, la batterie de détecteurs (2.5) étant conçue pour effectuer plusieurs mesures successives pendant le réchauffement, permettant ainsi de déterminer la courbe dans le temps de l'indice de réfraction de la zone de réchauffement dans le fluide.

10. Dispositif selon la revendication 9, **caractérisé en ce que** le laser (2.2) produisant le faisceau de mesure (2.3) est le dispositif de réchauffement du fluide.

11. Dispositif selon la revendication 10, **caractérisé en ce que** l'agencement optique (2.4, 2.6) est tel que le faisceau optique (2.3) est orienté de façon non divisée à travers le fluide (8).

12. Dispositif selon l'une quelconque des revendications 9 à 11, **caractérisé par** la présence d'une lentille de centrage (2.6) permettant de centrer le faisceau laser à l'intérieur de l'écoulement de fluide (8).

13. Dispositif selon l'une quelconque des revendications 9 à 12, **caractérisé en ce que** la batterie de détecteurs (2.5) est une batterie de détecteurs linéaires ou une batterie de détecteurs (2.5) bidimensionnels plans.

14. Dispositif selon l'une quelconque des revendications 9 à 13, **caractérisé en ce que** le dispositif d'analyse est conçu pour déterminer les moments statistiques des signaux reçus tels que la valeur moyenne, la variance, l'oblique statistique et/ou le kurtosis.
